# EUROPÄISCHE PATENTSCHRIFT

(11) **EP 2 697 515 B1**
(45) Veröffentlichungstag und Bekanntmachung des Hinweises auf die Patenterteilung: **01.01.2020**
(21) Anmeldenummer: 12722683.5
(22) Anmeldetag: 21.05.2012
(51) Int. Cl.: F04D 29/12, F16J 15/34

(54) **MEHRSTUFIGE KREISELPUMPE MIT SAMMELRAUM**
MULTI-STAGE CENTRIFUGAL PUMP HAVING A COLLECTING CHAMBER
POMPE CENTRIFUGE À PLUSIEURS ÉTAGES MUNIE D'UNE CHAMBRE COLLECTRICE

(30) Priorität: 04.08.2011 DE 102011109442
(43) Veröffentlichungstag der Anmeldung: 19.02.2014
(73) Patentinhaber: WILO SE, 44263 Dortmund (DE)
(72) Erfinder: RUZZA, Alain, F-53150 Saint Cénéré (FR); FAUCHERON, Stéphane, F-53000 Laval (FR); STAHLJANS, Holger, 44137 Dortmund (DE)
(74) Vertreter: Cohausz Hannig Borkowski Wißgott
(86) Internationale Anmeldenummer: PCT/EP2012/002145
(87) Internationale Veröffentlichungsnummer: WO 2013/017181

(56) Entgegenhaltungen:
- EP-A- 0 658 693
- EP-A- 0 940 611
- WO-A1-98/04856
- JP-A- 2005 002 955

## Beschreibung

Die Erfindung betrifft eine mehrstufige Kreiselpumpe mit vertikaler Pumpenwelle und einem oberen Sammelraum, in den die letzte Pumpenstufe hineinfördert und aus dem die dort kreisende Flüssigkeit zum Pumpenauslass strömt, wobei in der den Sammelraum abdeckenden oberen Wand eine Gleitringdichtung für die Pumpenwelle angeordnet ist, und eine radial nach innen weisende Leitwand vorgesehen ist, die die kreisende Flüssigkeit zur Gleitringdichtung hin führt.

Bei mehrstufigen Kreiselpumpen hat es sich gezeigt, dass im oberen Sammelraum sich Luftblasen ansammeln, die einen oberen Luftbereich schaffen, der die dort befindliche Gleitringdichtung umgibt, so dass es zu einem Trockenlauf der Gleitringdichtung kommen kann. Dies reduziert die Lebensdauer der Gleitringdichtung und kann zu ihrem Ausfall führen.

Um dies zu verhindern ist es bekannt, auf dem Boden des Sammelraums eine Leitwand radial zu befestigen, die die im Sammelraum kreisende Flüssigkeit zur Gleitringdichtung führt, so dass ein Trockenlauf verhindert wird. Es hat sich aber gezeigt, dass diese bekannt Lösung keine ausreichende Schmierung der Gleitringdichtung sicherstellt.

Aus der JP 2005-2955 ist eine mehrstufige Kreiselpumpe bekannt mit einem oberen Sammelraum, aus dem die Flüssigkeit radial in den Druckstutzen gelangt, der sich in Höhe des Sammelraums befindet. Bei dieser Bauart befindet sich die Gleitringdichtung im Austrittsbereich der Pumpe, so dass stets eine Zwangsumspülung der Gleitringdichtung stattfindet.

Aufgabe der Erfindung ist es, eine Kreiselpumpe der eingangs genannten Art so zu verbessern, dass die Flüssigkeit in einer ausreichenden Menge zur Gleitringdichtung geführt wird. Ferner ist es Aufgabe der Erfindung eine konstruktiv einfache Lösung zu schaffen.

Diese Aufgaben werden erfindungsgemäß dadurch gelöst, dass der Sammelraum eine zylindrische Innenwand aufweist, an der die Leitwand befestigt ist und dass in der Innenwand in Höhe der Leitwand die Austrittsöffnungen angeordnet sind, durch die die geförderte Flüssigkeit über einen äußeren Ringraum zum Pumpenauslass strömt.

Die Leitwand ist höher und damit näher zur Gleitringdichtung angeordnet, so dass eine ausreichende ständige Benetzung der Gleitringdichtung gewährleistet ist.

Vorzugsweise ist die Leitwand in einem Abstand zum Boden des Sammelraumes befestigt. Besonders vorteilhaft ist es, wenn der Abstand der halben bis doppelten Höhe der Leitwand entspricht. Auch wird vorgeschlagen, dass die Leitwand einwandig oder doppelwandig ausgeführt ist.

Eine sichere Führung des Flüssigkeitsstroms zur Gleitringdichtung ist dann gegeben, wenn die Leitwand teilzylindrisch gebogen ist. Ferner kann die Leitwand im waagerechten Querschnitt L-, V- oder U-förmig sein.

Eine besonders hohe Position der Leitwand wird dadurch ermöglicht, dass das innere obere Ende der Leitwand eine Ausnehmung bildet, in die die Gleitringdichtungsaufnahme hineinragt.

Ferner wird vorgeschlagen, dass in der Innenwand in Höhe der Leitwand die Austrittsöffnungen angeordnet sind, durch die die geförderte Flüssigkeit insbesondere über einen äußeren Ringraum zum Pumpenauslass strömt. Eine einfache Konstruktion ist dann gegeben, wenn der Sammelraum von einem topfförmigen Blech gebildet ist.

Eine besonders einfache Befestigung ist gegeben, wenn die Leitwand durch Clinchen an der Innenwand befestigt ist. Hierdurch ist ein Vorlochen nicht erforderlich. Alternativ kann aber auch geschweißt oder geklebt werden

Ausführungsbeispiele der Erfindung sind in den Zeichnungen dargestellt und werden im Folgenden näher beschrieben. Es zeigen
- Figur 1: eine perspektivische Ansicht des Sammelraums in einer ersten Ausführung;
- Figur 2: eine Ansicht von oben der Ausführung nach Figur 1;
- Figur 3: einen axialen Schnitt durch die Ausführung nach Figur 1;
- Figuren 4 bis 7: verschiedene Ausführungsformen der Leitwand in Ansichten von oben.

Eine mehrstufige Kreiselpumpe weist oberhalb der letzten Stufe einen Sammelraum 1 auf, aus dem die dort kreisende Flüssigkeit zu einem Ringraum strömt, der die Pumpenstufen umgibt. Der Sammelraum 1 wird von einer zylindrischen koaxialen Wand 2 gebildet mit einer Innenwand 2a und einem den Sammelraum nach unten verschließenden waagerechten Boden 3.

Der Sammelraum 1 ist von der vertikalen Pumpenwelle koaxial durchdrungen, die in einer Gleitringdichtung gelagert ist, die oberhalb des Sammelraums in einer nicht dargestellten Aufnahme in einer abdeckenden oberen Wand insbesondere einem oberen Deckel angeordnet ist und zumindest teilweise in den Sammelraum hineinreicht.

Im oberen Bereich der Sammelraumwand 2 ist eine Reihe von kreisförmigen Austrittsöffnungen 4 eingebracht, durch die die Förderflüssigkeit, die im Sammelraum kreist, nach außen zum Pumpenauslass, insbesondere über den äußeren Ringraum, strömt.

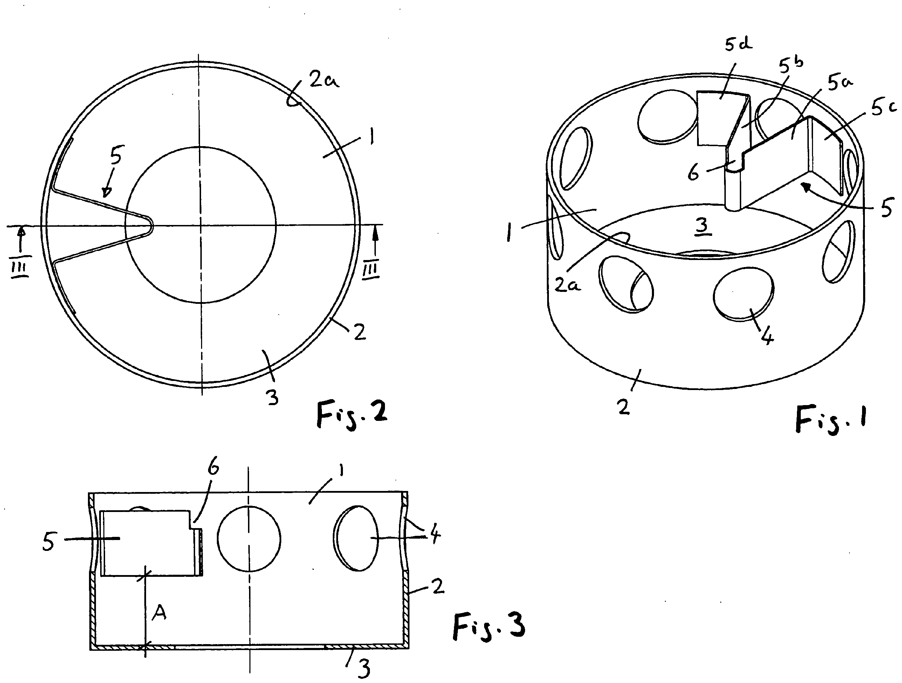

Auf der Innenwand 2a des Sammelraums 1 ist eine radiale Leitwand 5 befestigt, insbesondere angeclincht, angeklebt oder angeschweißt. Im Ausführungsbeispiel nach den Figuren 1 bis 3 besteht die Leitwand 5 aus einem V-förmig gebogenen Blechstreifen, dessen Blechfläche vertikal und damit parallel zur Pumpenachse liegt. Die Enden der Schenkel 5a, 5b sind nach außen zu Endblechen 5c und 5d abgebogen, so dass diese Endbleche auf der Innenwand 2a jeweils zwischen zwei Austrittsöffnungen 4 befestigt insbesondere angeclincht, angeschweißt oder angeklebt anliegen. Hierbei bilden die beiden Schenkel 5a, 5b miteinander einen Winkel α von 30 Grad, wobei dieser Winkel auch kleiner oder größer sein kann, so dass ein Bereich von 20 bis 40 Grad bevorzugt ist.

Das vordere in den Sammelraum 1 hineinragende abgerundete Ende, dass die beiden Schenkel 5a, 5b miteinander verbindet, weist eine obere Ausnehmung 6 auf, in die die Gleitringdichtungsaufnahme hineinreicht. Hierdurch ist die Leitwand 5 besonders hoch im Sammelraum 1 angeordnet und damit besonders nahe der Gleitringdichtung.

Der Abstand A der Leitwand 5 vom Boden 3 entspricht vorzugsweise der halben bis doppelten Höhe der Leitwand 5, bzw. etwa der halben Höhe der Außenwand 2.

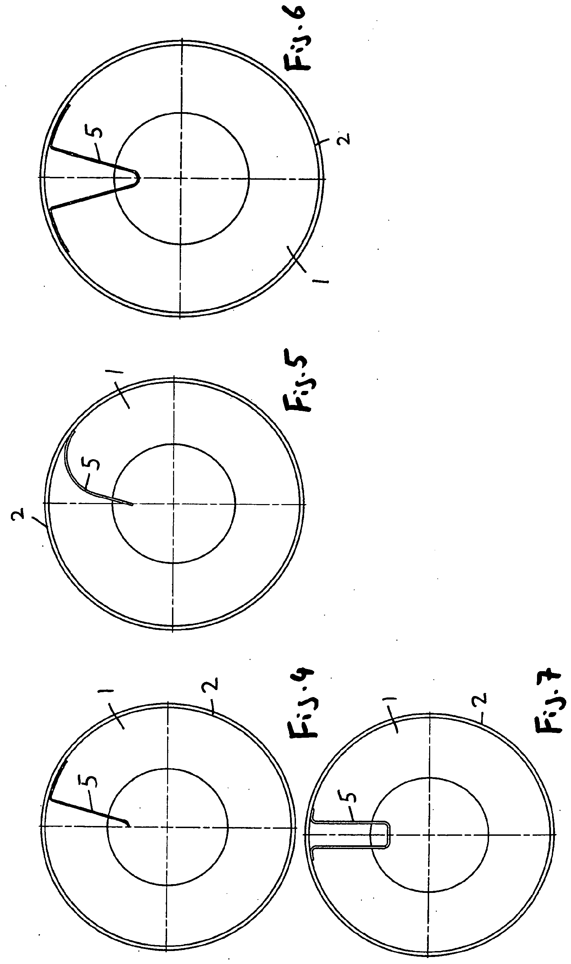

In dem Ausführungsbeispiel nach den Figuren 1 bis 3 ist die Leitwand doppelwandig in V-Form ausgeführt. Stattdessen kann die Leitwand aber auch doppelwandig mit parallelen Schenkeln 5a, 5b und damit U-förmig ausgeführt sein, wie dies Figur 7 zeigt. Ferner sind noch andere einwandige Ausführungen der Leitwand in den Figuren 4 und 5 dargestellt. So kann die Leitwand beispielsweise L-förmig oder teilzylindrisch im Schnitt geformt sein.

## Patentansprüche

1. Mehrstufige Kreiselpumpe mit vertikaler Pumpenwelle und einem oberen Sammelraum (1), in den die letzte Pumpenstufe hineinfördert und aus dem die dort kreisende Flüssigkeit zum Pumpenauslass strömt, wobei in der den Sammelraum (1) abdeckenden oberen Wand eine Gleitringdichtung für die Pumpenwelle angeordnet ist, und eine radial nach innen weisende Leitwand (5) vorgesehen ist, die die kreisende Flüssigkeit zur Gleitringdichtung hin führt, **dadurch gekennzeichnet, dass** der Sammelraum eine zylindrische Innenwand (2a) aufweist, an der die Leitwand (5) befestigt ist, und dass in der Innenwand (2a) in Höhe der Leitwand (5) die Austrittsöffnungen (4) angeordnet sind, durch die die geförderte Flüssigkeit über einen äußeren Ringraum zum Pumpenauslass strömt.

2. Kreiselpumpe nach Anspruch 1, **dadurch gekennzeichnet, dass** die Leitwand (5) in einem Abstand (A) zum Boden (3) des Sammelraumes (1) befestigt ist.

3. Kreiselpumpe nach Anspruch 2, **dadurch gekennzeichnet, dass** der Abstand (A) der halben bis doppelten Höhe der Leitwand (5) entspricht.

4. Kreiselpumpe nach einem der vorherigen Ansprüche, **dadurch gekennzeichnet, dass** die Leitwand (5) einwandig oder doppelwandig ausgeführt ist.

5. Kreiselpumpe nach einem der vorherigen Ansprüche, **dadurch gekennzeichnet, dass** die Leitwand (5) teilzylindrisch gebogen ist.

6. Kreiselpumpe nach einem der vorherigen Ansprüche, **dadurch gekennzeichnet, dass** die Leitwand (5) im waagerechten Querschnitt L-, V- oder U-förmig ist.

7. Kreiselpumpe nach einem der vorherigen Ansprüche, **dadurch gekennzeichnet, dass** das innere obere Ende der Leitwand (5) eine Ausnehmung (6) bildet, in die die Gleitringdichtungsaufnahme hineinragt.

8. Kreiselpumpe nach einem der vorherigen Ansprüche, **dadurch gekennzeichnet, dass** der Sammelraum (1) von einem topfförmigen Blech gebildet ist.

9. Kreiselpumpe nach einem der vorherigen Ansprüche, **dadurch gekennzeichnet, dass** die Leitwand (5) durch Clinchen an der Innenwand (2a) befestigt ist.

10. Kreiselpumpe nach einem der vorherigen Ansprüche, **dadurch gekennzeichnet, dass** die Leitwand (5) durch Schweißen an der Innenwand (2a) befestigt ist.

11. Kreiselpumpe nach einem der vorherigen Ansprüche, **dadurch gekennzeichnet, dass** die Leitwand (5) durch Kleben an der Innenwand (2a) befestigt ist.

## Claims

1. Multi-stage centrifugal pump comprising a vertical pump shaft and an upper collection chamber (1) into which the last pump stage empties and out of which the liquid circulating there flows to the pump outlet, wherein a mechanical seal for the pump shaft is arranged in the upper wall which covers the collection chamber (1), and a guide wall (5) which faces radially inward and guides the circulating liquid to the mechanical seal is provided, **characterized in that** the collection chamber has a cylindrical inner wall (2a) to which the guide wall (5) is fastened, and **in that** the outlet openings (4), through which the conveyed liquid flows via an outer annular chamber to the pump outlet, are arranged in the inner wall (2a) level with the guide wall (5).

2. Centrifugal pump according to Claim 1, **characterized in that** the guide wall (5) is fastened at a distance (A) from the base (3) of the collection chamber (1).

3. Centrifugal pump according to Claim 2, **characterized in that** the distance (A) corresponds to half to double the height of the guide wall (5).

4. Centrifugal pump according to one of the preceding claims, **characterized in that** the guide wall (5) is of single-walled or double-walled design.

5. Centrifugal pump according to one of the preceding claims, **characterized in that** the guide wall (5) is partially cylindrically bent.

6. Centrifugal pump according to one of the preceding claims, **characterized in that** the guide wall (5) is L-, V- or U-shaped in horizontal cross section.

7. Centrifugal pump according to one of the preceding claims, **characterized in that** the inner upper end of the guide wall (5) forms a recess (6) into which the mechanical seal receptacle protrudes.

8. Centrifugal pump according to one of the preceding claims, **characterized in that** the collection chamber (1) is formed by a pot-like metal sheet.

9. Centrifugal pump according to one of the preceding claims, **characterized in that** the guide wall (5) is fastened to the inner wall (2a) by clinching.

10. Centrifugal pump according to one of the preceding claims, **characterized in that** the guide wall (5) is fastened to the inner wall (2a) by welding.

11. Centrifugal pump according to one of the preceding claims, **characterized in that** the guide wall (5) is fastened to the inner wall (2a) by adhesive bonding.

## Revendications

1. Pompe centrifuge à plusieurs étages dotée d'un arbre de pompe vertical et d'un volume collecteur (1) alimenté par le dernier étage de pompe et hors duquel le liquide en circulation coule vers le refoulement de pompe, dans laquelle une garniture mécanique pour l'arbre de pompe est agencée dans la paroi supérieure recouvrant le volume collecteur (1), et une paroi de guidage (5) dirigée radialement vers l'intérieur est prévue, laquelle mène le liquide en circulation vers la garniture mécanique, **caractérisée en ce que** le volume collecteur comporte une paroi interne cylindrique (2a), à laquelle la paroi de guidage (5) est fixée, et **en ce que** les ouvertures de sortie (4) qui sont agencées dans la paroi interne (2a) à la hauteur de la paroi de guidage (5), sont celles au travers desquelles le fluide convoyé coule vers le refoulement de pompe par le biais d'un espace annulaire externe.

2. Pompe centrifuge selon la revendication 1, **caractérisée en ce que** la paroi de guidage (5) est fixée à une distance (A) par rapport au fond (3) de l'espace collecteur (1).

3. Pompe centrifuge selon la revendication 2, **caractérisée en ce que** la distance (A) correspond à entre la moitié et le double de la hauteur de la paroi de guidage (5).

4. Pompe centrifuge selon l'une des revendications précédentes, **caractérisée en ce que** la paroi de guidage (5) est réalisée à simple paroi ou à double paroi.

5. Pompe centrifuge selon l'une des revendications précédentes, **caractérisée en ce que** la paroi de guidage (5) est courbée de manière partiellement cylindrique.

6. Pompe centrifuge selon l'une des revendications précédentes, **caractérisée en ce que** la paroi de guidage (5) est en forme de L, de V ou de U dans sa section horizontale.

7. Pompe centrifuge selon l'une des revendications précédentes, **caractérisée en ce que** l'extrémité interne supérieure de la paroi de guidage (5) forme un évidement (6), le logement de garniture mécanique s'engageant dans celui-ci.

8. Pompe centrifuge selon l'une des revendications précédentes, **caractérisée en ce que** le volume collecteur (1) est formé d'une tôle en forme de godet.

9. Pompe centrifuge selon l'une des revendications précédentes, **caractérisée en ce que** la paroi de guidage (5) est fixée à la paroi interne (2a) par sertissage.

10. Pompe centrifuge selon l'une des revendications précédentes, **caractérisée en ce que** la paroi de guidage (5) est fixée à la paroi interne (2a) par soudage.

11. Pompe centrifuge selon l'une des revendications précédentes, **caractérisée en ce que** la paroi de guidage (5) est fixée à la paroi interne (2a) par collage.
